# EUROPÄISCHE PATENTSCHRIFT

(11) **EP 2 872 305 B1**
(45) Veröffentlichungstag und Bekanntmachung des Hinweises auf die Patenterteilung: **11.09.2019**
(21) Anmeldenummer: 13729601.8
(22) Anmeldetag: 10.06.2013
(51) Int. Cl.: B29B 15/12, G06K 19/077, B29L 17/00

(54) **VERFAHREN ZUR HERSTELLUNG EINER FOLIE**
METHOD FOR PRODUCING A FILM
PROCÉDÉ POUR LA PRODUCTION D'UNE FEUILLE

(30) Priorität: 13.07.2012 DE 102012013965
(43) Veröffentlichungstag der Anmeldung: 20.05.2015
(73) Patentinhaber: Giesecke+Devrient Mobile Security GmbH, 81677 München (DE)
(72) Erfinder: RIEDL, Josef, 85395 Attenkirchen (DE)
(86) Internationale Anmeldenummer: PCT/EP2013/001696
(87) Internationale Veröffentlichungsnummer: WO 2014/008966

(56) Entgegenhaltungen:
- EP-A1- 0 041 849
- WO-A1-2005/073907
- WO-A1-2011/135852
- DE-A1- 19 617 621
- GB-A- 2 055 057
- US-A- 3 843 386
- US-A- 4 024 305

## Beschreibung

Die Erfindung offenbart ein Verfahren zur Herstellung einer Folie, welche insbesondere zur Herstellung eines tragbaren Datenträgers, wie z.B. einer Chipkarte oder eines Personalausweises z.B. mit einem Chip verwendet werden kann.

Aus dem Stand der Technik sind tragbare Datenträger bekannt, wie z.B. eine Chipkarte im ID-1- oder ID-3-Format oder ein Personalausweis z.B. mit einem Chip.

US 3 843 386 A beschreibt ein Verfahren zur Beschichtung eines textilen Stoffs mit einer Polymerschicht.

US 4 024 305 A beschreibt ein Verfahren zur Herstellung einer beschichteten Schicht, die als äußerste Schicht einer Schaltungsplatine dient.

EP 0 041 849 A1 beschreibt ein Verfahren zum Imprägnieren eines Gewebes mit PVC.

WO 2011 / 135 852 A1 beschreibt ein Verfahren zur Verbesserung einer Beschichtung eines Gewebes, ohne dass eine Qualität des Gewebes verschlechtert wird.

GB 2 055 057 A beschreibt ein Verfahren zur Herstellung einer dekorativen Folie.

Problematisch am Stand der Technik ist, dass die tragbaren Datenträger allgemein schlechte mechanische Eigenschaften aufweisen. Als mechanische Eigenschaft sei hier beispielhaft die mangelnde mechanische Stabilität zu nennen.

Aufgabe der Erfindung ist es deshalb die mechanischen Eigenschaften von tragbaren Datenträgern zu verbessern.

Die Aufgabe der Erfindung wird durch den unabhängigen Anspruch und die nebengeordneten Ansprüche gelöst. Vorteilhafte Ausführungen sind in den abhängigen Ansprüchen beschrieben.

Die Aufgabe wird gelöst durch ein Verfahren zur Herstellung einer Folie für eine Herstellung eines tragbaren Datenträgers, das dadurch gekennzeichnet ist, dass die Folie aus einem Gewebe und einer Vergussmasse hergestellt wird, wobei eine Beschichtung auf das Gewebe aufgebracht wird, wobei auf das Gewebe vorher die Vergussmasse aufgebracht wurde, wobei die Vergussmasse und/oder die Beschichtung bedruckt werden/ wird. Als Gewebe wird vorteilhafterweise ein offenes Gewebe verwendet, wie beispielsweise ein Siebdruckgewebe. Für das Gewebe wird als Material vorteilhafterweise Polyethylenterephtalat (PET) oder Polyamid (PA) verwendet. Es sind aber auch andere geeignete Materialien für das Gewebe möglich. Der große Vorteil der Erfindung ist, dass insbesondere die mechanischen Eigenschaften, wie z.B. die Stabilität, der erfindungsgemäßen Folie erheblich verbessert werden im Vergleich zu herkömmlichen Folien. Das Gewebe und die Vergussmasse können vom Material her so aufeinander eingestellt werden, dass eine optimale weitere Verarbeitung möglich ist, wie z.B. bedrucken und/ oder laminieren. Insbesondere beim Laminieren ist es sehr vorteilhaft, dass erfindungsgemäß ein Verbund der erfindungsgemäßen Folie mit anderen Folien hergestellt werden kann ohne zusätzliche Hilfsmittel, wie z.B. einen Haftvermittler, z.B. einen Primer. Der Grund liegt in der später beschriebenen Beschichtung, welche beispielsweise das Hilfsmittel, z.B. einen Haftvermittler zur Verfügung stellt. Wesentlich ist, dass das Gewebe zumindest teilweise von der Vergussmasse eingeschlossen ist, bevorzugt ist das Gewebe vollständig von der Vergussmasse eingeschlossen. Weitere Vorteil der Erfindung ist die Erhöhung der Festigkeit eines Laminierverbundes von Folien, welche einen tragbaren Datenträger bilden. Daraus folgt, dass die Fälschungsmöglichkeit eines tragbaren Datenträgers durch Entfernung und Manipulation einer Folienschicht im Aufbau des tragbaren Datenträgers deutlich erschwert wird.

Ein vorteilhaftes Ausführungsbeispiel zeichnet sich dadurch aus, dass die Vergussmasse so auf das Gewebe aufgebracht wird, dass die Vergussmasse das Gewebe durchdringt und alle Öffnungen im Gewebe ausfüllt und verschließt. Zum Aufbringen der Vergussmasse auf das Gewebe kann jedes geeignete Verfahren verwendet werden, wie z.B. ein sogenanntes Coating-Verfahren. Ein besonders vorteilhaftes Verfahren zum Aufbringen der Vergussmasse auf das Gewebe ist, wenn das Gewebe, beispielsweise von einer Rolle abgewickelt wird, um es dem Verfahren zuzuführen und dann in einen Behälter mit flüssiger Vergussmasse getaucht wird, so dass die Vergussmasse das Gewebe durchdringen kann. Das Gewebe wird aus dem Behälter zu einem Rakel geführt, wo ein Teil der Vergussmasse an der Oberfläche des Gewebes oder in einem einstellbaren Abstand vom Gewebe beim Transport am Rakel vorbei abgestriffen wird. Anschließend wird die Vergussmasse getrocknet. Als alternative Verfahren zum Auftragen der Vergussmasse auf das Gewebe bieten sich beispielsweise ein Standard-Beschichtungsverfahren, z.B. Reverse Roll, ein Rakel-Beschichtungsverfahren, ein SiebdruckVerfahren, ein Giesverfahren, ein Rasterwalzen-Verfahren oder jedes andere geeignete Verfahren an. Nach dem Trocknen können sich dann weitere Bearbeitungsschritte anschließen, wie z.B. Bedrucken oder Laminieren.

Ein weiteres vorteilhaftes Ausführungsbeispiel zeichnet sich dadurch aus, dass die Vergussmasse das Gewebe so durchdringt und alle Öffnungen so ausfüllt, dass die Vergussmasse eine geschlossene Oberfläche bildet. Vorteilhafterweise ist die geschlossene Oberfläche auch eine ebene Oberfläche.

Das erfindungsgemäße Verfahren zeichnet sich dadurch aus, dass eine Beschichtung auf das Gewebe aufgebracht wird. Vor dem Aufbringen der Beschichtung wurde die Vergussmasse auf das Gewebe aufgebracht. Vorteilhafterweise wird die Vergussmasse erst getrocknet und ausgehärtet und dann wird die Beschichtung aufgebracht. Für das Aufbringen der Beschichtung gilt das Entsprechende, was auch für das Aufbringen der Vergussmasse oben ausgeführt worden ist. Alternativ bestehen die Vergussmasse und die Beschichtung aus dem gleichen Material.

Ein weiteres vorteilhaftes Ausführungsbeispiel zeichnet sich dadurch aus, dass die Vergussmasse erst ausgehärtet wird und danach die Beschichtung aufgebracht wird.

Ein weiteres vorteilhaftes Ausführungsbeispiel zeichnet sich dadurch aus, dass das Gewebe und/oder die Vergussmasse und/oder die Beschichtung aus einem Kunststoff bestehen/besteht. Gewebe, Vergussmasse und Beschichtung können aus dem gleichen oder aus unterschiedlichen Materialien, bestehen. Ferner können Gewebe, Vergussmasse oder Beschichtung aus einem anderen Material als Kunststoff bestehen, wie z.B. einem Metall. Beispielsweise kann das Gewebe aus einem Drahtgeflecht bestehen. Die Vergussmasse kann beispielsweise aus einer Kunststoff-Lösung, wie z.B. einer Dispersion bestehen, wobei die Dispersion vorteilhafterweise wasserlöslich ist. Ferner können als Kunststoff-Lösungen eine Suspension oder ein Lösemittelsystem eingesetzt werden. Allen Kunststoff-Lösungen, welche für die erfindungsgemäße Folie verwendet werden, ist gemeinsam, dass sie hitzeaktivierbar sind und dass sie im getrockneten und ausgehärteten Zustand nicht klebrig sind. Die Viskosität der Kunststoff-Lösungen bei der Aufbringung auf das Gewebe ist dabei jeweils abhängig vom verwendeten Gewebe und vom jeweiligen Verfahren zum Auftragen der Kunststoff-Lösung als Vergussmasse auf das Gewebe. Vergussmasse und Beschichtung bestehen vorteilhafterweise aus dem gleichen Material. Als vorteilhaftes Material kann Polyurethan (PU) basierend auf einer wässrigen Lösung verwendet werden. Zusätzlich kann ein Härter verwendet werden. Neben einer wässrigen Lösung basierend auf PU ist alternativ auch eine wässrige Lösung basierend auf einer Acrylat-Basis möglich. Alternativ zur wässrigen Lösung kann auch eine lösemittelhaltige Lösung verwendet werden.

Ein wesentliches Merkmal des Gewebes ist dessen Oberflächenspannung und Rauhigkeit an der Oberfläche damit sich zwischen Gewebe und Vergussmasse eine gute und haltbare Verbindung ausbilden kann. Beispielsweise sollte für eine Vergussmasse basierend auf einer wässrigen Lösung die Oberflächenspannung eines Gewebes bei größer 35 mN/m, bevorzugt größer 37 mN/m besonders bevorzugt größer 39 mN/m, idealerweise bevorzugt bei größer 41 mN/m liegen. Weitere bei der Wahl einer geeigneten Vergussmasse zu beachtende Größen des Gewebes sind beispielsweise das Material des Gewebes, die Größe der Öffnungen des Gewebes, die Dicke des Gewebes und der Typ des Gewebes.

Bei der Herstellung einer erfindungsgemäßen Folie muss zuerst der Verwendungszweck der erfindungsgemäßen Folie festgelegt werden. Hier ist insbesondere die Dicke der erfindungsgemäßen Folie für den späteren Verwendungszweck ein wichtiges Kriterium.

Wenn die Dicke der Folie festgelegt ist, wird ein Gewebe ausgewählt, das beispielsweise ca. 2 bis 10 % dünner ist, als die festgelegte Dicke der Folie. Zur Kostenersparnis ist es vorteilhaft, wenn das Gewebe möglichst kleine Öffnungen im Gewebe hat. Allerdings muss die Größe der Öffnungen im Gewebe mit dem Material der Vergussmasse so abgestimmt werden, dass die Vergussmasse das Gewebe so ausfüllen kann, dass eine beidseitig geschlossene Oberfläche auf dem Gewebe entsteht. Ferner müssen die Materialeigenschaften der Vergussmasse, insbesondere dessen Viskosität, so auf das Gewebe und dessen Material angepasst werden, dass beim Aufbringen der Vergussmasse auf das Gewebe die Vergussmasse das Gewebe durchdringt und im Gewebe bleibt. Bei zu geringer Größe der Öffnungen des Gewebes kann es sein, dass beispielsweise die Vergussmasse das Gewebe nicht durchdringen kann oder die Vergussmasse vom Gewebe wieder abläuft.

Beispielsweise können bevorzugte erfindungsgemäße Folien entsprechend den folgenden technischen Daten hergestellt werden.

Ein Gewebe PET 1500 / 68-64 W PW, weist als Vergussmasse und Beschichtung einen Klebstoff auf. Die erfindungsgemäß hergestellte Folie hat ein Flächengewicht von ca. 35 g/m². Das Gewebe hat eine Dicke von ca. 98 µm. Das Gewebe mit Vergussmasse und Beschichtung hat eine Dicke von ca. 105 µm.

Ein Gewebe PET 1500 / 90-48 W PW, weist als Vergussmasse und Beschichtung einen Klebstoff auf. Die erfindungsgemäß hergestellte Folie hat ein Flächengewicht von ca. 40 g/m². Das Gewebe hat eine Dicke von ca. 78 µm. Das Gewebe mit Vergussmasse und Beschichtung hat eine Dicke von ca. 90 µm.

Ein Gewebe PET 1500 / 68-64 W PW, weist als Vergussmasse und Beschichtung das Material RW 8300, welches einen Härter beinhaltet, auf. Die erfindungsgemäß hergestellte Folie hat ein Flächengewicht von ca. 35 g/m². Das Gewebe hat eine Dicke von ca. 98 µm. Das Gewebe mit Vergussmasse und Beschichtung hat eine Dicke von ca. 102 µm.

Ein Gewebe PET 1500 / 90-48 W PW, weist als Vergussmasse und Beschichtung das Material RW 8300, welches einen Härter beinhaltet, auf. Die erfindungsgemäß hergestellte Folie hat ein Flächengewicht von ca. 35 g/m². Das Gewebe hat eine Dicke von ca. 78 µm. Das Gewebe mit Vergussmasse und Beschichtung hat eine Dicke von ca. 84 µm.

Ein weiteres vorteilhaftes Ausführungsbeispiel zeichnet sich dadurch aus, dass die ausgehärtete Vergussmasse nicht klebrig ist.

Das erfindungsgemäße Verfahren zeichnet sich dadurch aus, dass als Beschichtung ein Haftvermittler und/oder ein Kleber verwendet werden/wird. Dies erleichtert beispielsweise die weitere Verarbeitung der erfindungsgemäßen Folie, wenn diese beispielsweise mit anderen Folien laminiert wird.

Das erfindungsgemäße Verfahren zeichnet sich dadurch aus, dass die Vergussmasse und/oder die Beschichtung bedruckt werden/wird. Das Bedrucken findet nach dem Trocknen der Vergussmasse und/oder der Beschichtung statt. Die Vergussmasse und/oder die Beschichtung können dabei mittels geeigneten Druckverfahren, wie z.B. Offsetdruck oder Siebdruck, bedruckt werden. Eine andere vorteilhafte Ausführungsform ist, dass auch funktionale Elemente, wie z.B. eine Antennenspule, beispielsweise auf die Vergussmasse und/oder Beschichtung, beispielsweise mittels einer leitfähigen Paste, gedruckt werden. Vorteilhafterweise wird zum Bedrucken für die Vergussmasse und/oder die Beschichtung als Material ein Haftvermittler, sogenannter Primer, verwendet. Vorteilhafterweise kann das Material der Vergussmasse und/oder der Beschichtung als Kleber für weitere Folien verwendet werden. Dies hat den Vorteil, dass selbst wenn beispielsweise nicht auf die Vergussmasse bzw. die Beschichtung gedruckt wird, sondern auf einer benachbarten Folie, mit z.B. einer hohen Flächendeckung im Offsetdruck, dann kann auf einen sonst notwendigen Kleber verzichtet werden um einen guten Verbund mit der benachbarten Folie zu gewährleisten.
Ein weiterer Vorteil ist, dass durch den Druck auf der erfindungsgemäßen Folie kein wertvoller, da begrenzter Platz im Aufbau eines Datenträgers verloren geht. Ein weiterer Vorteil ist, dass das erfindungsgemäße Gewebe die mechanische Stabilität der erfindungsgemäßen Folie insbesondere beim Bedrucken deutlich verstärkt.

Das erfindungsgemäße Verfahren zeichnet sich dadurch aus, dass die Vergussmasse und/oder die Beschichtung transparent sind/ist. Dies kann vorteilhaft benutzt werden, wenn z.B. grafische Motive von außen erkennbar sein sollen, aber vor den Einflüssen des Gebrauchs durch z.B. mechanische Kräfte geschützt werden sollen.

Ein weiteres vorteilhaftes Ausführungsbeispiel zeichnet sich dadurch aus, dass das Gewebe auf einer Rolle für das Verfahren zur Verfügung gestellt wird und die damit hergestellte Folie auf eine Rolle aufgewickelt wird. Somit sind vorteilhafterweise das Gewebe und die hergestellte Folie für ein Rollezu-Rolle-Herstellungsverfahren geeignet.

Ein weiteres vorteilhaftes Ausführungsbeispiel zeichnet sich dadurch aus, dass das Gewebe und/oder die Vergussmasse und/oder die Beschichtung Sicherheitsmerkmale aufweisen/aufweist. Als Sicherheitsmerkmale kommen beispielsweise fluoreszierende Fäden, fluoreszierende Vergussmasse und/oder Beschichtung, eingefärbte Vergussmasse und/oder Beschichtung, Melierfasern, Taggants, etc. in Frage.
Vorteilhafterweise kann das Gewebe Sicherheitsmerkmale aufweisen, z.B. kann mindestens ein Faden, aus dem das Gewebe besteht, Sicherheitsmerkmale aufweisen, beispielsweise kann mindestens ein Faden Merkmalsstoffe aufweisen, welche auch aus dem Bereich des Banknotendrucks bekannt sind oder es kann mindestens ein lichtleitender Faden als Sicherheitsmerkmal verwendet werden. In der Vergussmasse und der Beschichtung können ebenfalls vorteilhafterweise Sicherheitsmerkmale enthalten sein.
Die Sicherheitsmerkmale können vorteilhafterweise ohne und/oder mit technischen Hilfsmitteln erkennbar sein.

Die Aufgabe wird ferner gelöst durch eine Folie, welche gemäß dem oben beschriebenen Verfahren hergestellt ist.

Die Aufgabe wird ferner gelöst durch ein Verfahren zur Herstellung eines tragbaren Datenträgers, welches sich dadurch auszeichnet, dass eine Folie gemäß den oben beschriebenen Merkmalen verwendet wird.

Ein weiteres vorteilhaftes Ausführungsbeispiel zeichnet sich dadurch aus, dass die Folie teilflächig oder vollflächig auf den Datenträger aufgebracht wird. Die erfindungsgemäße Folie kann somit speziell in den Bereichen des Datenträgers angeordnet werden, wo beispielsweise besonders hohe mechanische Belastungen auftreten, um die mechanischen Eigenschaften des Datenträgers insbesondere dort zu verstärken.

Ein weiteres vorteilhaftes Ausführungsbeispiel zeichnet sich dadurch aus, dass die Folie in zumindest einem Streifen aufgebracht wird. Der Streifen kann sich dabei über die ganze Fläche oder einen Teil der Fläche eines tragbaren Datenträgers z.B. eines Sicherheitsdokuments erstrecken. Der Einsatz der erfindungsgemäßen Folie als Streifen ist insbesondere dann vorteilhaft, wenn der Streifen beispielsweise als sogenannte Einnählasche für Sicherheitsdokumente, wie z.B. Personalausweise verwendet wird. Mittels einer Einnählasche, die aus einer erfindungsgemäßen Folie besteht, kann das sogenannte Aufsperrverhalten so vorteilhaft beeinflusst werden, dass auch bei wiederholtem Öffnen und Schließen, beispielsweise eines Personalausweises, die Außenseiten im geschlossenen Zustand des Sicherheitsdokuments immer parallel zu liegen kommen.

Ein weiteres vorteilhaftes Ausführungsbeispiel zeichnet sich dadurch aus, dass die Folie in einem Winkel kleiner oder gleich 90 Grad zu einer Kante des Datenträgers aufgebracht wird. Die Anordnung der Folie in einem Winkel zu einer Kante des Datenträgers kann insbesondere dazu dienen die mechanischen Eigenschaften z.B. eines tragbaren Datenträgers, beispielsweise einer Chipkarte, zu verbessern.

Ein weiteres vorteilhaftes Ausführungsbeispiel zeichnet sich dadurch aus, dass die Folie in zumindest einer Schicht des Datenträgers aufgebracht wird. Die erfindungsgemäße Folie kann in einer Schicht oder in mehreren Schichten des Datenträgers angeordnet werden. Dies hängt insbesondere ab von den zu erwartenden mechanischen Belastungen des Datenträgers.

Ein weiteres vorteilhaftes Ausführungsbeispiel zeichnet sich dadurch aus, dass die erfindungsgemäße Folie mit anderen Folien zu einem tragbaren Datenträger laminiert wird. Sehr vorteilhaft ist, dass die erfindungsgemäße Folie auch mit anderen Folien bzw. Folienmaterialien kombiniert werden kann, um einen tragbaren Datenträger herzustellen. Die erfindungsgemäße Folie hat dabei den Vorteil, dass die mechanischen Eigenschaften des durch die Laminierung entstehenden Verbunds deutlich verbessert sind, z.B. hinsichtlich der Stabilität, Reißfestigkeit oder der Biegsamkeit.

Die Aufgabe der Erfindung wird ferner gelöst durch einen tragbaren Datenträger, welcher sich dadurch auszeichnet, dass der Datenträger mindestens eine Folie gemäß der obigen Diskussion aufweist.

Im Folgenden werden Ausführungsbeispiele der Erfindung anhand der beigefügten Figuren detailliert beschrieben.
Figur 1 zeigt ein Tauchverfahren zur Herstellung einer erfindungsgemäßen Folie.
Figur 2 zeigt einen Schnitt durch eine erfindungsgemäße Folie nachdem eine Vergussmasse und eine Beschichtung auf ein Gewebe aufgetragen worden sind.
Figur 3 zeigt ein Anwendungsbeispiel für die erfindungsgemäße Folie anhand einer Karte.
Figur 4 zeigt ein Anwendungsbeispiel für die erfindungsgemäße Folie anhand einer Datenseite mit Einnählasche für einen Ausweis.

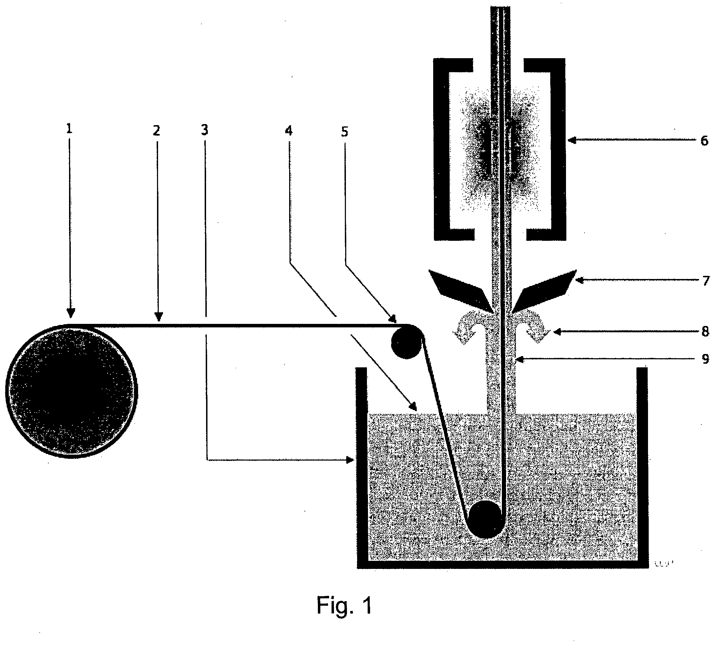

Figur 1 zeigt ein Tauchverfahren zur Herstellung einer erfindungsgemäßen Folie. Von einer Rolle 1 wird ein Gewebe 2 zur Verfügung gestellt. Das Gewebe 2 wird über eine Umlenkrolle 5 in einen Behälter 3 geführt. Im Behälter 3 befindet sich eine Vergussmasse 4 in flüssiger Form. Beim Transport des Gewebes 2 durch den Behälter 3 dringt die Vergussmasse 4 in das Gewebe 2 ein, wobei alle Öffnungen im Gewebe 2 mittels der Vergussmasse 4 ausgefüllt und verschlossen werden. Das Gewebe 2 trägt auf ihrer Oberfläche beim Verlassen der flüssigen Vergussmasse 4 eine Beschichtung 9 aus Vergussmasse 4. Mittels einem Rakel 7 wird ein einstellbarer Teil 8 der Beschichtung 9 abgetragen, um die Höhe der Beschichtung 9 einzustellen. Der abgetragene Teil 8 von Vergussmasse 4 der Beschichtung 9 fließt wieder in den Behälter 3 zurück. Im Anschluss an den Rakel 7 wird die Vergussmasse 4 und die Beschichtung 9 auf dem Gewebe 2 in einer Trockenvorrichtung 6 getrocknet. Falls die Vergussmasse 4 und die Beschichtung 9 aus dem gleichen Material bestehen, dann kann mittels dem Tauchverfahren gleichzeitig sowohl die Vergussmasse 4 als auch die Beschichtung 9 auf das Gewebe 2 aufgetragen werden. Andernfalls müssen Vergussmasse 4 und Beschichtung 9 in getrennten Verfahrensschritten aufgetragen werden.

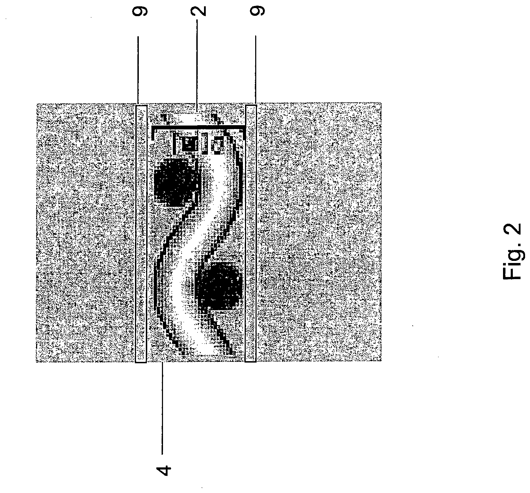

Figur 2 zeigt einen Schnitt durch eine erfindungsgemäße Folie nachdem eine Vergussmasse 4 und eine Beschichtung 9 auf ein Gewebe 2 aufgetragen worden sind. In der Mitte befindet sich das Gewebe 2. Die Öffnungen des Gewebes 2 sind von der Vergussmasse 4 durchdrungen und werden von der Vergussmasse 4 verschlossen. In Figur 2 ist auf jeder Seite des Gewebes 2 eine Beschichtung 9 aufgetragen. Alternativ ist es auch möglich, dass nur auf einer Seite des Gewebes 2 eine Beschichtung 9 aufgetragen ist. Ferner ist es möglich, dass wenn auf beiden Seiten des Gewebes 2 eine Beschichtung 9 aufgetragen ist, jede Beschichtung 9 aus unterschiedlichen Materialien besteht.

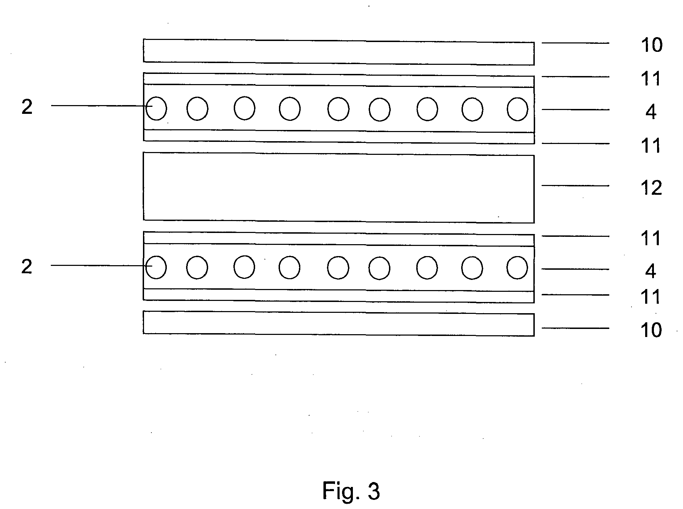

Figur 3 zeigt ein Anwendungsbeispiel für die erfindungsgemäße Folie anhand einer Karte, wie z.B. eine Chipkarte. In der Mitte der Karte befindet sich eine Trägerfolie 12. Die Karte ist symmetrisch zur Trägerfolie 12 aufgebaut. Auf den Außenseiten der Karte befindet sich jeweils eine transparente Folie 10. Zwischen der Trägerfolie 12 und der transparenten Folie 10 befindet sich die erfindungsgemäße Folie. In diesem Ausführungsbeispiel weist die erfindungsgemäße Folie ein Gewebe 2 auf, das mit einer Vergussmasse 4, z.B. einer Kunststoff-Lösung vergossen ist. Auf beiden Seiten des Gewebes 2 mit der Vergussmasse 4 befindet sich jeweils eine Druckschicht 11. Bei der Druckschicht 11 kann es sich beispielsweise um einen Designdruck oder einen Motivdruck handeln oder um eine gedruckte Antennenspule für eine kontaktlose Kommunikation mit einem Terminal. Aus Darstellungsgründen wurde auf die Einzeichnung eines Chips, an den die Antennenspule angeschlossen wird, verzichtet.

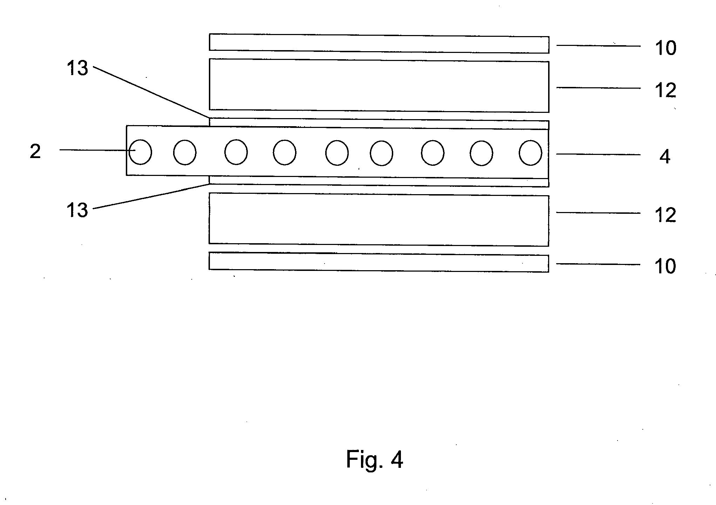

Figur 4 zeigt ein Anwendungsbeispiel für die erfindungsgemäße Folie anhand einer Datenseite mit Einnählasche für einen Ausweis. Die Einnählasche wird hier durch eine erfindungsgemäße Folie gebildet, welche aus einem Gewebe 2 und einer Vergussmasse 4 besteht. Die erfindungsgemäße Folie ragt hier aus dem in Figur 4 gezeigten Aufbau heraus damit diese später in einem Ausweis vernäht werden kann. Der in Figur 4 dargestellte Aufbau ist symmetrisch zur erfindungsgemäßen Folie. Alternativ kann der Aufbau auch asymmetrisch erfolgen. Auf beiden Seiten der erfindungsgemäßen Folie befindet sich jeweils eine Druckschicht 13, welche hier einen Spulendruck für eine Antennenspule darstellt. Wiederum wurde hier aus Darstellungsgründen auf die Einzeichnung eines Chips, an den die Antennenspule angeschlossen wird verzichtet. Auf der der erfindungsgemäßen Folie gegenüberliegenden Seite der Druckschicht 13 befindet sich eine Trägerschicht 12, welche beispielsweise aus einer Kunststofffolie besteht. Auf der Außenseite der Datenseite befindet sich jeweils eine transparente Folie 10.

### Bezugszeichenliste

- 1: Rolle
- 2: Gewebe
- 3: Behälter
- 4: Vergussmasse
- 5: Umlenkrolle
- 6: Trockenvorrichtung
- 7: Rakel
- 8: abgetragener Teil der Beschichtung
- 9: Beschichtung
- 10: transparente Folie
- 11: Druckschicht, Designdruck, Motivdruck
- 12: Trägerfolie
- 13: Druckschicht, Antennenspulendruck

## Patentansprüche

1. Verfahren zur Herstellung einer Folie für eine Herstellung eines tragbaren Datenträgers, **dadurch gekennzeichnet, dass** die Folie aus einem Gewebe (2) und einer Vergussmasse (4) hergestellt wird,
wobei eine Beschichtung (9) auf das Gewebe (2) aufgebracht wird, wobei auf das Gewebe (2) vorher die Vergussmasse (4) aufgebracht wurde,
wobei die Vergussmasse (4) und/oder die Beschichtung (9) bedruckt werden/ wird,
wobei als Beschichtung (9) ein Haftvermittler und/oder ein Kleber verwendet werden/ wird,
wobei die Vergussmasse (4) und/oder die Beschichtung (9) transparent sind/ ist.

2. Verfahren gemäß Anspruch 1, **dadurch gekennzeichnet, dass** die Vergussmasse (4) erst ausgehärtet wird und danach die Beschichtung (9) aufgebracht wird.

3. Verfahren gemäß den vorhergehenden Ansprüchen, **dadurch gekennzeichnet, dass** das Gewebe (2) und/oder die Vergussmasse (4) und/oder die Beschichtung (9) aus dem gleichen oder unterschiedlichen Materialien besteht/bestehen.

4. Verfahren gemäß den vorhergehenden Ansprüchen, **dadurch gekennzeichnet, dass** das Gewebe (2) und/oder die Vergussmasse (4) und/oder die Beschichtung (9) aus einem Kunststoff bestehen/besteht.

## Claims

1. A method for manufacturing a foil for a manufacture of a portable data carrier, **characterized in that** the foil is manufactured from a fabric (2) and a potting compound (4),
wherein a coating (9) is applied to the fabric (2), wherein the potting compound (4) was previously applied to the fabric (2),
wherein the potting compound (4) and/or the coating (9) are/is printed,
wherein as a coating (9) an adhesion promoter and/or a bonding agent are/is employed,
wherein the potting compound (4) and/or the coating (9) are/is transparent.

2. The method according to claim 1, **characterized in that** the potting compound (4) is first cured and thereafter the coating (9) is applied.

3. The method according to the preceding claims, **characterized in that** the fabric (2) and/ or the potting compound (4) and/ or the coating (9) consists/ consist of the identical or different materials.

4. The method according to the preceding claims, **characterized in that** the fabric (2) and/or the potting compound (4) and/or the coating (9) consist/ consists of a plastic.

## Revendications

1. Procédé de fabrication d'une feuille pour une fabrication d'une support de données portable, **caractérisé en ce que** la feuille est fabriquée à partir d'un tissu (2) et d'une masse d'enrobage (4),
cependant qu'un revêtement (9) est appliqué sur le tissu (2), cependant que, sur le tissu (2), la masse d'enrobage (4) a été auparavant appliquée,
cependant que la masse d'enrobage (4) et/ou le revêtement (9) sont/est imprimé(s),
cependant que, comme revêtement (9), un agent adhésif et/ou une colle sont/est utilisé(s),
cependant que la masse d'enrobage (4) et/ou le revêtement (9) sont/est transparent(s).

2. Procédé selon la revendication 1, **caractérisé en ce que** la masse d'enrobage (4) est d'abord durcie et qu'ensuite le revêtement (9) est appliqué.

3. Procédé selon une des revendications précédentes, **caractérisé en ce que** le tissu (2) et/ou la masse d'enrobage (4) et/ou le revêtement (9) consiste(nt) en le même ou en différents matériau(x).

4. Procédé selon une des revendications précédentes, **caractérisé en ce que** le tissu (2) et/ou la masse d'enrobage (4) et/ou le revêtement (9) consiste(nt) en une matière plastique.
